# FASCICULE DE BREVET EUROPEEN

(11) **EP 1 358 662 B1**
(45) Date de publication et mention de la délivrance du brevet: **05.07.2006**
(21) Numéro de dépôt: 01995734.9
(22) Date de dépôt: 18.12.2001
(51) Int. Cl.: H01H 1/00, G06K 11/06

(54) **DISPOSITIF D'ENTREE DE DONNEES SECURISE**
GESICHERTES DATENEINGABEGERÄT
SECURED DATA INPUT DEVICE

(30) Priorité: 28.12.2000 FR 0017228
(43) Date de publication de la demande: 05.11.2003
(73) Titulaire: Thales, 75008 Paris (FR)
(72) Inventeur: BERTHOU, Nicolas, Thales Intellectual Property, F-94117 Arcueil Cedex (FR)
(74) Mandataire: Collet, Alain
(86) Numéro de dépôt international: PCT/FR2001/004040
(87) Numéro de publication internationale: WO 2002/054423

(56) Documents cités:
- CH-A- 679 083
- FR-A- 2 183 712
- NL-C- 1 004 982
- US-A- 6 148 094

## Description

L'invention se rapporte à un dispositif d'entrée de données vers un équipement par exemple électronique. Le dispositif comporte un organe mobile destiné à être déplacé par un opérateur. Les données entrées étant fonction du déplacement de l'organe mobile. L'organe mobile peut, par exemple, être formé par une touche d'un clavier, un bouton rotatif ou une boule de désignation.

Certaines données sont très sensibles et réclament donc une sécurisation de l'entrée de données. A titre d'exemple dans le domaine aéronautique, les données relatives aux conditions de vol, comme les consignes d'altitude ou de vitesse verticale, sont très sensibles. Des instabilités dans l'entrée de ces données, dues par exemple à des vibrations, peuvent entraîner des modifications involontaires des données, ce qui peut être très préjudiciable à la conduite d'un aéronef.

On peut valider une entrée de donnée par un double mouvement de l'organe mobile. Par exemple, l'entrée de données effectuée à l'aide d'un bouton rotatif peut être sécurisée par l'enfoncement de ce bouton. Ce double mouvement est compliqué à mettre en oeuvre et quelquefois impossible lorsque, par exemple, tous les mouvements possibles d'un organe mobile sont utilisés pour entrée des données. Un exemple de ce double mouvement est donné dans le document CH 679 083 A qui décrit une souris d'ordinateur pour laquelle la validation du déplacement de la souris est réalisée au moyen d'un appui sur un interrupteur 1.

L'invention a pour but de simplifier la sécurisation d'un dispositif d'entrée de données, en proposant des moyens de validation des données entrées, moyens de nature différente de celle des moyens d'entrée eux-mêmes.

A cet effet, l'invention a pour objet un dispositif d'entrée de données vers un équipement, le dispositif comportant un organe mobile (2) destiné à être déplacé par un opérateur, les données entrées étant fonction du déplacement de l'organe mobile (2), des moyens de détection (5) fournissant une information représentative de l'existence ou non d'un contact de l'opérateur avec l'organe mobile (2), des moyens de validation (9) recevant ladite information ainsi que lesdites données entrées, les moyens de validation (9) ne fournissant à l'équipement lesdites données entrées que lorsque l'information est représentative de l'existence d'un contact de l'opérateur avec l'organe mobile (2), caractérisé en ce que le contact est la mise à la masse de l'organe mobile (2) par l'intermédiaire de la résistance équivalente au corps humain de l'opérateur.

L'entrée de données est ici un déplacement mécanique de l'organe mobile. La validation des données entrées utilise une information qui n'est pas un déplacement mais un simple contact de l'opérateur avec l'organe mobile. Le fait que les actions nécessaires à l'entrée de données et à la validation soit de nature différente d'une part déplacement mécanique et, d'autre part, contact, permet de sécuriser l'entrée de données. En effet, si les actions étaient de même nature, par exemple deux déplacements, une seule perturbation extérieure comme, par exemple, une vibration serait susceptible d'entrer une donnée intempestive et de la valider.

Avantageusement, le contact de l'opérateur, détecté par les moyens de détection, est le contact normal qu'effectue l'opérateur pour déplacer l'organe mobile. Ainsi, il n'est pas nécessaire pour l'opérateur d'effectuer une autre action mécanique que celle nécessaire au déplacement de l'organe mobile.

L'invention sera mieux comprise et d'autres avantages apparaîtront à la lecture de la description détaillée de plusieurs modes de réalisation de l'invention, description illustrée par le dessin joint dans lequel :
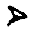 la figure 1 représente schématiquement les moyens de l'invention ;
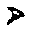 la figure 2 représente un bouton rotatif ;
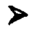 la figure 3 représente un bouton poussoir ;
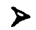 la figure 4 représente une boule de désignation ;
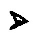 la figure 5 détaille un exemple de réalisation des moyens de détection.

Par souci de simplicité dans la suite de la description, les mêmes objets porteront les mêmes repères dans les différentes figures.

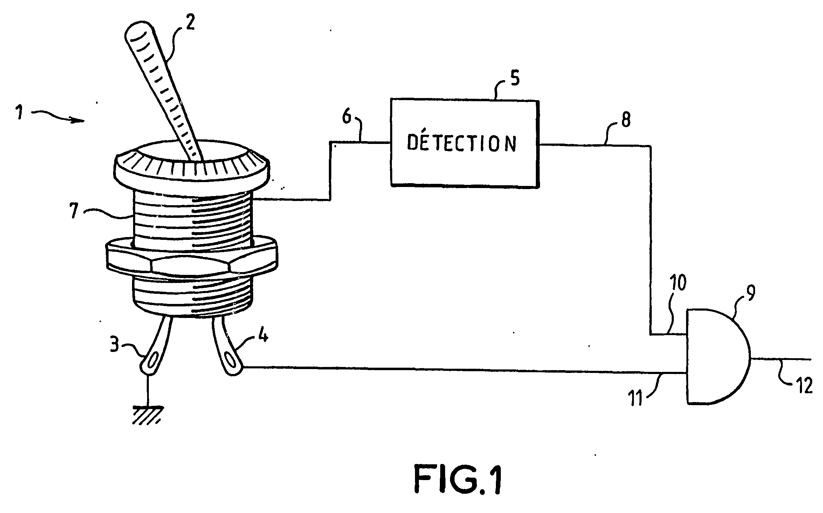

Le dispositif représenté figure 1 représente un interrupteur 1 par exemple à deux positions. L'interrupteur comporte deux bornes 3 et 4 dont l'une, la borne 3 par exemple, est raccordée à la masse. Lorsque l'opérateur manoeuvre l'organe mobile 2, il relie ou non la borne 4 à la masse.

Le dispositif comporte en outre des moyens de détection 5 fournissant une information représentative de l'existence ou non d'un contact de l'opérateur avec l'organe mobile 2. L'organe mobile 2 est, par exemple, métallique ou comporte sur sa surface extérieure un matériau conducteur de l'électricité.

L'organe mobile 2 est relié électriquement à une entrée 6 des moyens de détection 5 par exemple par l'intermédiaire du corps 7 de l'interrupteur 1. Le corps humain, en l'occurrence celui de l'opérateur, peut être assimilé électriquement à une résistance de l'ordre de deux kilos ohms. Ainsi, lorsqu'une main de l'opérateur est en contact avec l'organe mobile 2, l'entrée 6 est mise à la masse par l'intermédiaire de la résistance équivalente au corps humain de l'opérateur. Les moyens de détection 5 comportent une sortie 8 sur laquelle ils fournissent une information représentative de l'existence ou non d'un contact de l'opérateur avec l'organe mobile 2.

Le dispositif comporte, de plus, des moyens de validation 9 représentés par une cellule ET. Une première entrée 10 des moyens de validation 9 reçoit l'information délivrée par les moyens de détection 5 sur la sortie 8. Une deuxième entrée 11 des moyens de validation 9 reçoit des données représentatives de la position de l'organe mobile 2. Sur la figure 1, la deuxième entrée 11 est reliée à la masse ou non par l'intermédiaire de la borne 4, en fonction de la position de l'organe mobile 2. Les moyens de validation 9 délivrent sur une sortie 12 les données présentes sur la deuxième entrée 11 lorsque les moyens de détection 5 fournissent une information représentative de l'existence d'un contact de l'opérateur avec l'organe mobile 2.

En d'autres termes, les données fournies par l'interrupteur 1 ne sont validées que lorsque l'opérateur touche l'organe mobile 2. Cela permet d'éviter qu'une modification intempestive des données, sans une action de l'opérateur, ne puisse être prise en compte, par un équipement recevant les données présentes sur la sortie 12. Une modification intempestive peut être, par exemple, due à une vibration que subit l'interrupteur 1.

L'invention assure également une différence de nature entre la façon dont les données sont entrées, ici il s'agit d'un déplacement mécanique de l'organe mobile 2 et, ia façon dont les données sont validées, il s'agit ici de détecter la présence de l'opérateur. Cette différence de nature améliore la sécurisation du dispositif d'entrée de données. En effet, lorsque l'entrée des données ainsi que leurs validations sont assurées par des moyens de mêmes natures, par exemple mécaniques, une seule perturbation, par exemple une vibration, peut affecter à la fois l'entrée des données et la validation de ces données. L'invention permet donc d'éviter ce problème.

Avantageusement, tant que les moyens de détection 5 n'ont pas détecté la présence d'un opérateur, les moyens de validation 9 maintiennent sur leur sortie 12, les données présentes sur l'entrée 11 lors de la dernière détection de présence de l'opérateur réalisée par les moyens de détection 5. Cette fonction peut être assurée par les moyens de validation 9.

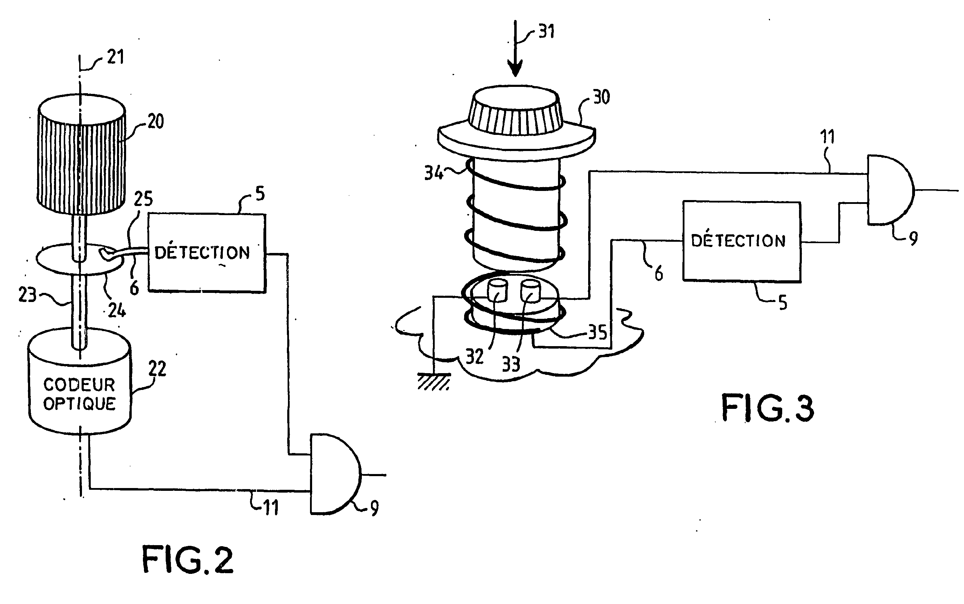

La figure 2 représente une variante de réalisation d'un dispositif conforme à l'invention. L'organe mobile comporte ici un bouton rotatif 20 susceptible de tourner autour d'un axe 21. Le bouton rotatif 20 entraîne un codeur optique 22 par l'intermédiaire d'un arbre 23 qui s'étend suivant l'axe 21. Une lame de contact 24 est montée solidaire de l'arbre 23, sensiblement perpendiculairement à l'axe 21. La lame de contact 24 tourne avec le bouton rotatif 20. La surface extérieure du bouton rotatif 20 est conductrice de l'électricité et est reliée électriquement à la lame de contact 24. Un doigt 25 forme l'entrée 6 des moyens de détection 5. Le doigt 25 est conducteur de l'électricité et est en contact permanent avec la lame de contact 24. Ainsi quelle que soit la position angulaire du bouton rotatif 21 autour de l'axe 20, lorsqu'un opérateur touche le bouton rotatif, les moyens de détection 5 peuvent délivrer un signal correspondant à un éventuel contact de l'opérateur avec le bouton rotatif 21. Par ailleurs, le codeur optique 22 délivre un signal représentatif de la position angulaire du bouton rotatif 20 autour de l'axe 21 à l'entrée 11 des moyens de validation 9.

La figure 3 représente une autre variante d'un dispositif conforme à l'invention. L'organe mobile comporte ici un bouton poussoir 30 que l'opérateur peut enfoncer dans une direction symbolisée par la flèche 31. Lorsque le bouton poussoir 30 est enfoncé, il relie électriquement deux contacts 32 et 33. Un ressort hélicoïdal 34 maintient le bouton poussoir 30 en position haute en s'opposant à son enfoncement dans la direction 31. La surface extérieure du bouton poussoir 30 est conductrice de l'électricité et est reliée électriquement au ressort 34 lui aussi conducteur de l'électricité.

Le ressort 34 s'appuie d'une part, sur le bouton poussoir 30 et, d'autre part sur une partie fixe 35. Les contacts 32 et 33 sont solidaires de la partie fixe 35. L'entrée 6 des moyens de détection est raccordée électriquement à l'extrémité du ressort 34 en appui sur la partie fixe 35. L'entrée 11 des moyens de validation 9 est raccordée électriquement au contact 33. Le contact 32 est quant à lui raccordé à la masse. Dans cette variante, les raccordements des entrées 6 et 11 sont réalisés sur des parties immobiles même lorsque l'opérateur manoeuvre le bouton poussoir 30.

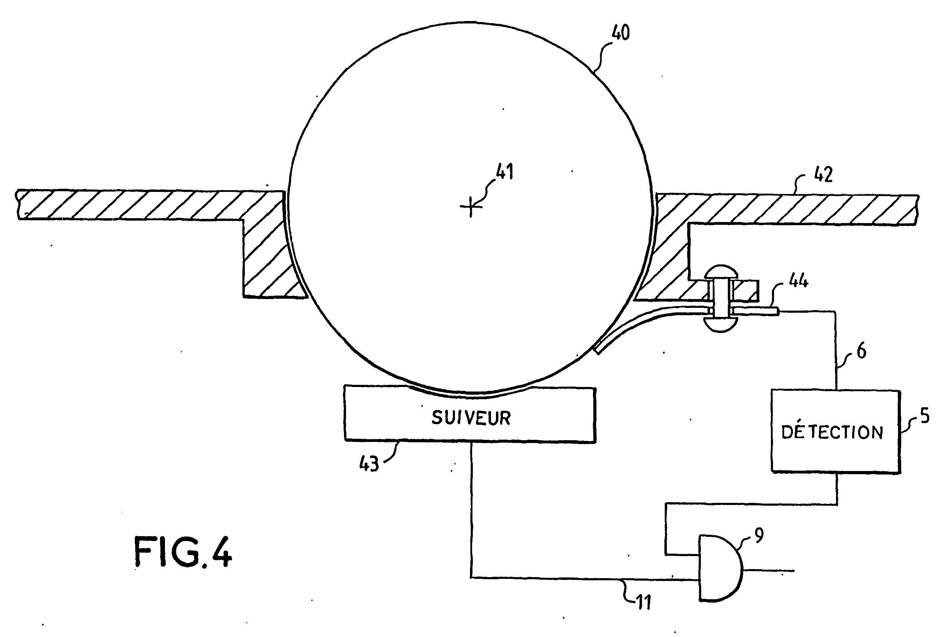

Dans la variante représentée figure 4, l'organe mobile comporte une boule de désignation 40 susceptible de tourner autour de son centre 41. La boule de désignation 40 est destinée à être manoeuvrée par la main d'un opérateur par exemple pour déplacer un curseur sur un écran d'ordinateur. La boule de désignation 40 est guidée dans ses mouvements de rotation par un carter 42. Les mouvements de la boule de désignation 40 sont transformés en données électriques au moyen d'un suiveur 43. Ces données électriques sont fournies à l'entrée 11 des moyens de validation 9. La surface extérieure de la boule de désignation 40 est conductrice de l'électricité. Une lame 44, solidaire du carter 42, est en contact permanent avec la surface extérieure de la boule de désignation 40 de façon à ce que la main de l'opérateur se trouve en contact électrique avec l'entrée 6 des moyens de détection 5 lorsqu'il touche la boule de désignation 40.

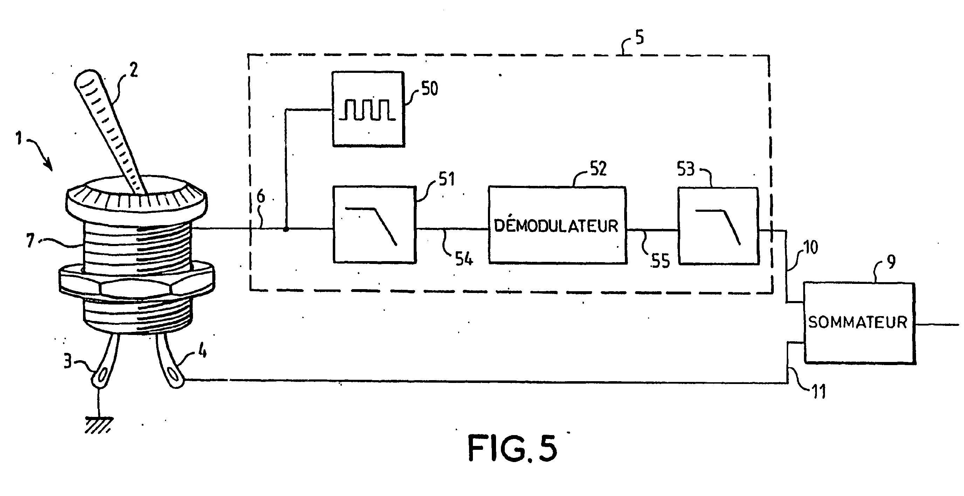

La figure 5 reprend les différents éléments représentés sur la figure 1 et détaille un exemple de réalisation des moyens de détection 5. Il est bien entendu possible de remplacer l'interrupteur 1, représenté figure 5, par notamment l'un des autres dispositifs d'entrée de données représentés sur les figures 2 à 4.

Les moyens de détection 5, représentés figure 5, comportent une horloge 50 délivrant un signal d'horloge vers l'entrée 6. Les moyens de détection 5 comportent en outre un premier filtre passe bas 51, un démodulateur 52 ainsi qu'un second filtre passe bas 53. Lorsqu'un opérateur est en contact avec l'organe mobile 2, l'entrée 6 est mise à la masse par l'intermédiaire de l'opérateur et le signal d'horloge est très fortement affaibli. L'entrée 6 forme également l'entrée du premier filtre passe bas 51. Ce filtre 51 a pour fonction d'éliminer d'éventuels signaux parasites à haute fréquence qui pourraient se superposer au signal présent sur l'entrée 6, l'organe mobile 2 étant susceptible de se comporter comme une antenne captant de tels signaux parasites. La fréquence de coupure du filtre 51 est, par exemple, de l'ordre de quelques dizaines de mégahertz et est, en tous cas, supérieure à la fréquence du signal d'horloge. Une sortie 54 du filtre 51 représente également l'entrée du démodulateur 52 qui a pour fonction de délivrer sur sa sortie 55 un signal enveloppe du signal présent sur l'entrée 6. Plus précisément, lorsque le signal d'horloge n'est pas affaibli, le signal présent sur la sortie 55 est à un niveau logique haut. Inversement, lorsque le signal d'horloge est affaibli par un contact de l'opérateur sur l'organe mobile 2, le signal d'horloge est à un niveau logique bas. La sortie 55 forme l'entrée du second filtre passe bas 53. Ce filtre 53 a pour fonction d'éviter que des changements d'états de faible durée du signal de sortie des moyens de détection 5 ne soient pris en compte. Par exemple, les moyens de détection ne doivent pas prendre en compte un simple effleurement rapide de l'organe mobile 2 par l'opérateur. La fréquence de coupure du second filtre passe bas 52 est, par exemple, de l'ordre de quelques dizaines de Hertz.

La sortie du filtre passe bas 53 forme la sortie 8 des moyens de détection 5 qui est reliée à l'entrée 10 des moyens de validation 9. Les moyens de validation 9 comportent par exemple un sommateur effectuant l'addition des signaux présents sur les deux entrées 10 et 11.

## Revendications

1. Dispositif d'entrée de données vers un équipement, le dispositif comportant un organe mobile (2) destiné à être déplacé par un opérateur, les données entrées étant fonction du déplacement de l'organe mobile (2), des moyens de détection (5) fournissant une information représentative de l'existence ou non d'un contact de l'opérateur avec l'organe mobile (2), des moyens de validation (9) recevant ladite information ainsi que lesdites données entrées, les moyens de validation (9) ne fournissant à l'équipement lesdites données entrées que lorsque l'information est représentative de l'existence d'un contact de l'opérateur avec l'organe mobile (2), **caractérisé en ce que** le contact est la mise à la masse de l'organe mobile (2) par l'intermédiaire de la résistance équivalente au corps humain de l'opérateur.

2. Dispositif selon la revendication 1, **caractérisé en ce que** les moyens de validation (9) comportent des moyens pour délivrer les données existantes lors de la dernière détection de présence de l'opérateur.

3. Dispositif selon l'une des revendications précédentes, **caractérisé en ce que** les moyens de détection (5) détectent la mise à la masse de l'organe mobile (2) par l'intermédiaire de l'opérateur.

4. Dispositif selon la revendication 3, **caractérisé en ce qu'**une entrée (6) des moyens de détection (5) est reliée électriquement à une surface électriquement conductrice de l'organe mobile (2).

5. Dispositif selon l'une des revendications précédentes, **caractérisé en ce que** l'organe mobile (2) comporte un bouton rotatif (20) et une lame de contact (24) solidaire du bouton rotatif (20), le dispositif comportant un doigt (25) formant une entrée (6) des moyens de détection (5) et **en ce que** le doigt (25) est en contact permanent avec la lame de contact (24).

6. Dispositif selon la revendication 5, **caractérisé en ce qu'**une position angulaire du bouton rotatif (20) est transmise aux moyens de validation (9) à l'aide d'un codeur optique (22).

7. Dispositif selon l'une quelconque des revendications 1 à 4, **caractérisé en ce que** l'organe mobile (2) comporte un bouton poussoir (30), **en ce qu'**un ressort (34) s'oppose à un enfoncement du bouton poussoir (30) par l'opérateur, et **en ce que** le ressort (34) relie électriquement une surface extérieure du bouton poussoir 30 à une entrée (6) des moyens de détection (5).

8. Dispositif selon l'une quelconque des revendications 1 à 4, **caractérisé en ce que** l'organe mobile (2) comporte une boule de désignation (40) dont une surface extérieure est conductrice de l'électricité, **en ce qu'**il comporte des moyens (44) pour maintenir la surface extérieure de la boule désignation (40) en contact avec une entrée (6) des moyens de détection (5).

9. Dispositif selon l'une des revendications précédentes, **caractérisé en ce que** les moyens de détection (5) comportent des moyens (51) pour éliminer des signaux parasites à haute fréquence qui pourraient se superposer au signal présent sur une entrée (6) des moyens de détection (5).

10. Dispositif selon l'une des revendications précédentes, **caractérisé en ce que** les moyens de détection (5) comportent une horloge 50 dont le signal de sortie est affaibli lorsque l'opérateur est en contact avec l'organe mobile (2).

11. Dispositif selon la revendication 10, **caractérisé en ce que** les moyens de détection comportent des moyens (52) pour délivrer un signal enveloppe du signal d'horloge.

12. Dispositif selon la revendication 10, **caractérisé en ce que** les moyens de détection (5) comportent des moyens (53) pour éviter que des changements d'état de faible durée d'un signal de sortie des moyens de détection (5) ne soient pris en compte par les moyens de validation (9).

13. Dispositif selon la revendication 10, **caractérisé en ce que** les moyens de validation (9) comportent un sommateur effectuant l'addition d'un signal de sortie des moyens de détection (5) et des données.

## Claims

1. Device for inputting data to an item of equipment, the device comprising a mobile member (2) intended to be moved by an operator, the input data being dependent on the movement of the mobile member (2), detection means (5) providing information representing the existence or non-existence of a contact between the operator and the mobile member (2), validation means (9) receiving the said information and the said input data, the validation means (9) supplying the said input data to the equipment only when the information represents the existence of a contact between the operator and the mobile member (2), **characterized in that** the contact is the grounding of the mobile member (2) by the intermediary of the resistance equivalent to the human body of the operator.

2. Device according to Claim 1, **characterized in that** the validation means (9) comprise means of delivering the data existing at the time of the last detection of presence of the operator.

3. Device according to either of the preceding claims, **characterized in that** the detection means (5) detect the grounding of the mobile member (2) by the intermediary of the operator.

4. Device according to Claim 3, **characterized in that** an input (6) of the detection means (5) is electrically connected to an electrically conductive surface of the mobile member (2).

5. Device according to one of the preceding claims, **characterized in that** the mobile member (2) comprises a rotary knob (20) and a contact plate (24) integral with the rotary knob (20), the device comprising a finger (25) forming an input (6) of the detection means (5) and **in that** the finger (25) is in permanent contact with the contact plate (24).

6. Device according to Claim 5, **characterized in that** an angular position of the rotary knob (20) is transmitted to the validation means (9) with the help of an optical coder (22).

7. Device according to any one of Claims 1 to 4, **characterized in that** the mobile member (2) comprises a push button (30), **in that** a spring (34) opposes a pushing-in of the push button (30) by the operator, and **in that** the spring (34) electrically connects an outer surface of the push button (30) to an input (6) of the detection means (5).

8. Device according to any one of Claims 1 to 4, **characterized in that** the mobile member (2) comprises a track ball (40) of which an outer surface is electrically conductive, and **in that** it comprises means (44) for keeping the outer surface of the track ball (40) in contact with an input (6) of the detection means (5).

9. Device according to one of the preceding claims, **characterized in that** the detection means (5) comprise means (51) for eliminating high frequency interference signals which could be superimposed on the signal present on an input (6) of the detection means (5) .

10. Device according to one of the preceding claims, **characterized in that** the detection means (5) comprise a clock (50) whose output signal is attenuated when the operator is in contact with the mobile member (2) .

11. Device according to Claim 10, **characterized in that** the detection means (5) comprise means (52) for delivering an envelope signal of the clock signal.

12. Device according to Claim 10, **characterized in that** the detection means (5) comprise means (53) for preventing changes of state of short duration of an output signal of the detection means (5) from being taken into account by the validation means (9).

13. Device according to Claim 10, **characterized in that** the validation means (9) comprise an adder adding an output signal of the detection means (5) and data.

## Patentansprüche

1. Vorrichtung zur Eingabe von Daten in eine Einrichtung, wobei die Vorrichtung ein bewegliches Organ (2), das dazu bestimmt ist, von einem Bediener bewegt zu werden, wobei die eingegebenen Daten von der Bewegung des beweglichen Organs (2) abhängen, Erfassungsmittel (5), die eine Information liefern, die für einen vorhandenen oder nicht vorhandenen Kontakt des Bedieners mit dem beweglichen Organ (2) repräsentativ ist, und Validierungsmittel (9) aufweist, die die Information sowie die eingegebenen Daten empfangen, wobei die Validierungsmittel (9) die eingegebenen Daten nur dann an die Einrichtung liefern, wenn die Information für das Vorhandensein eines Kontakts des Bedieners mit dem beweglichen Organ (2) repräsentativ ist, **dadurch gekennzeichnet, dass** der Kontakt die Erdung des beweglichen Organs (2) über den dem menschlichen Körper des Bedieners entsprechenden Widerstand ist.

2. Vorrichtung nach Anspruch 1, **dadurch gekennzeichnet, dass** die Validierungsmittel (9) Mittel aufweisen, um die bei der letzten Erfassung der Anwesenheit des Bedieners vorhandenen Daten zu liefern.

3. Vorrichtung nach einem der vorhergehenden Ansprüche, **dadurch gekennzeichnet, dass** die Erfassungsmittel (5) die Erdung des bewegliche Organs (2) über den Bediener erfassen.

4. Vorrichtung nach Anspruch 3, **dadurch gekennzeichnet, dass** ein Eingang (6) der Erfassungsmittel (5) elektrisch mit einer elektrisch leitenden Fläche des beweglichen Organs (2) verbunden ist.

5. Vorrichtung nach einem der vorhergehenden Ansprüche, **dadurch gekennzeichnet, dass** das bewegliche Organ (2) einen Drehknopf (20) und ein Kontaktplättchen (24) aufweist, das fest mit dem Drehknopf (20) verbunden ist, wobei die Vorrichtung einen Finger (25) aufweist, der einen Eingang (6) der Erfassungsmittel (5) bildet, und dass der Finger (25) in permanentem Kontakt mit dem Kontaktplättchen (24) steht.

6. Vorrichtung nach Anspruch 5, **dadurch gekennzeichnet, dass** eine Winkelstellung des Drehknopfs (20) mit Hilfe eines optischen Codierers (22) an die Validierungsmittel (9) übertragen wird.

7. Vorrichtung nach einem der Ansprüche 1 bis 4, **dadurch gekennzeichnet, dass** das bewegliche Organ (2) einen Druckknopf (30) aufweist, dass eine Feder (34) sich einem Eindrücken des Druckknopfs (30) durch den Bediener widersetzt, und dass die Feder (34) eine Außenfläche des Druckknopfs (30) elektrisch mit einem Eingang (6) der Erfassungsmittel (5) verbindet.

8. Vorrichtung nach einem der Ansprüche 1 bis 4, **dadurch gekennzeichnet, dass** das bewegliche Organ (2) eine Bezeichnungskugel (40) aufweist, deren Außenfläche elektrisch leitend ist, dass sie Mittel (44) aufweist, um die Außenfläche der Bezeichnungskugel (40) mit einem Eingang (6) der Erfassungsmittel (5) in Kontakt zu halten.

9. Vorrichtung nach einem der vorhergehenden Ansprüche, **dadurch gekennzeichnet, dass** die Erfassungsmittel (5) Mittel (51) aufweisen, um Hochfrequenz-Störsignale zu unterdrücken, die das Signal überlagern könnten, das an einem Eingang (6) der Erfassungsmittel (5) vorhanden ist.

10. Vorrichtung nach einem der vorhergehenden Ansprüche, **dadurch gekennzeichnet, dass** die Erfassungsmittel (5) einen Taktgeber (50) aufweisen, dessen Ausgangssignal gedämpft wird, wenn der Bediener mit dem beweglichen Organ (2) in Kontakt steht.

11. Vorrichtung nach Anspruch 10, **dadurch gekennzeichnet, dass** die Erfassungsmittel (5) Mittel (52) aufweisen, um ein Hüllkurvensignal des Taktsignals zu liefern.

12. Vorrichtung nach Anspruch 10, **dadurch gekennzeichnet, dass** die Erfassungsmittel (5) Mittel (53) aufweisen, um zu verhindern, dass kurzzeitige Zustandsänderungen eines Ausgangssignals der Erfassungsmittel (5) von den Validierungsmitteln (9) berücksichtigt werden.

13. Vorrichtung nach Anspruch 10, **dadurch gekennzeichnet, dass** die Validierungsmittel (9) ein Summmierglied aufweisen, das die Addition eines Ausgangssignals der Erfassungsmittel (5) und der Daten durchführt.
